# EUROPEAN PATENT SPECIFICATION

(11) **EP 0 706 727 B1**
(45) Date of publication and mention of the grant of the patent: **17.06.1998**
(21) Application number: 95916531.7
(22) Date of filing: 27.04.1995
(51) Int. Cl.: H02K 5/16, H01R 39/40

(54) **BRUSH HOLDER ASSEMBLY**
BÜRSTENHALTER
ENSEMBLE PORTE-BALAI

(30) Priority: 28.04.1994 US 234737
(43) Date of publication of application: 17.04.1996
(73) Proprietor: SIEMENS CANADA LIMITED, Mississauga, Ontario L5N 7A6 (CA)
(72) Inventor: RUBINCHIK, Ilya, London, Ontario N6G 3S9 (CA)
(74) Representative: Allen, Derek
(86) International application number: PCT/CA95/00241
(87) International publication number: WO 95/30269

(56) References cited:
- EP-A- 0 258 132
- EP-A- 0 343 126
- US-A- 1 954 910
- US-A- 4 340 832
- US-A- 4 845 396

## Description

This invention relates to a direct current motors in general and more particularly to brush cards for one and two speed four pole permanent magnet motors.

### Background of the Invention

### Prior Art

US Patent 4,559,465 entitled "Brush Holder Assembly for an Electric Motor" issued to Gagneux, on December 17, 1985, describes a brush holder having a simple flat plate cur or stamped to provide slots for sliding of brushes and openings for holding the brush springs. The springs normally engage the ends of the associated brushes to bias them inwardly towards the motor commutator. When the brushes are retracted, the springs engage the sides of the brushes to lock the brushes in the slots.

A further brush holder for use with a multi-pole motor is disclosed in European patent application number 0 258 132. This patent, EP 0258132, teaches a simple arrangement for a brush holder, including a base member with a central aperture for receiving a commutator and elongated slots disposed at ninety degree intervals about and connecting with said central aperture. Brush boxes and brushes are disposed within these elongated slots and are connected together via bus bars arranged to be provided with corresponding slots so as to be integrated with the brush boxes and the base member. In spite of the simplicity of this arrangement, there exists a technical problem in reducing the number of parts required to assemble such brush holders, and in providing a simple arrangement for securing the brush boxes to the holder at a desired location.

These technical problems are addressed by the present invention.

### Summary of Invention

According to the present invention there is provided a brush holder for a multi-pole, single speed motor, said brush holder comprising a base member having a central aperture with elongated slots formed at ninety degree intervals to the circumference of said central aperture, an inner bus bar member and an outer bus bar member, wherein each of said inner and outer bus bar members have at least one pair of brush boxes disposed in diagonally opposite elongated slots,
characterised in that,
each of said inner and outer bus bar members have an arcuate bus bar plate fabricated from a flexibly resilient electrically conducting material and arranged so that said at least one pair of brush boxes are disposed at opposite ends of said arcuate bus bar plate and by deformably manipulating said bus bar plate said brush boxes may be snapped into opposite ones of said elongated slots, said brush boxes and said bus bar plate being on slots on opposite sides of said base member, the arrangement thereby obviating a requirement for further fixing means for securing said brush boxes to said brush holder.

According to an aspect of the present invention there is provided a method for assembling a multi-pole brush holder for a single speed motor comprising the steps of:
(i) fabricating a base member from an electrically nonconductive material with a central aperture and elongated slots extending outwardly from said aperture.
(ii) fabricating an inner bus bar member with at least one pair of brush boxes,
(iii) fabricating an outer bus bar member with at least one pair of brush boxes characterised by the steps of,
(iv) forming said inner bus bar member with an arcuate shaped bus bar plate from an electrically conducting resiliently flexible material,
(v) attaching said at least one pair of brush boxes so that a first brush box of the pair and a second brush box of the pair are disposed at opposite ends of the arcuate bus bar plate,
(vi) forming said outer bus bar member with an arcuate shaped bus bar plate from an electrically conducting resiliently flexible material,
(vii) attaching said at least one pair of brush boxes so that a first brush box of the pair and a second brush box of the pair are disposed at opposite ends of the arcuate shaped bus bar plate, and
(viii) deformably manipulating said inner and outer bus bar plates so that said brush boxes are fixably snapped into said elongated slots of said base member with said inner and outer bus bar plates disposed on opposite sides to said brush boxes said method thereby securing said brush boxes to said brush holder without a requirement for a further fixing means.

These advantages will become apparent from the following drawings and detailed description.

### Detailed Description of the Drawings

In the drawings:
Fig. 1 is a plan view of a four pole, single speed brush holder of the preferred embodiment;
Fig. 2 is a section view taken along line 2-2 in Fig. 1;
Fig. 3 is a section view taken along line 3-3 in Fig. 1;
Fig. 4 is a plan view of the base member of the brush holder of Fig. 1;
Fig. 5 is a plan view of the inner bus bar of the brush holder of Fig. 1;
Fig. 6 is a section view taken along line 6-6 in Fig. 5;
Fig. 7 is an elevation view taken in the direction of line 7 in Fig. 5;
Fig. 8 is an enlarged plan view of the area enclosed in the circle in Fig. 5;
Fig. 9 is a section view taken along line 9-9 in Fig. 5;
Fig. 10 is a section view taken along line 10-10 in Fig. 5;
Fig. 11 is a plan view of the outer bus bar of the brush holder of Fig. 1;
Fig. 12 is a section view taken along line 12-12 in Fig. 11;
Fig. 13 is an enlarged plan view of the area enclosed in the circle in Fig. 12; and
Fig. 14 is a side view of a four pole, two speed brush holder.

### Detailed Description

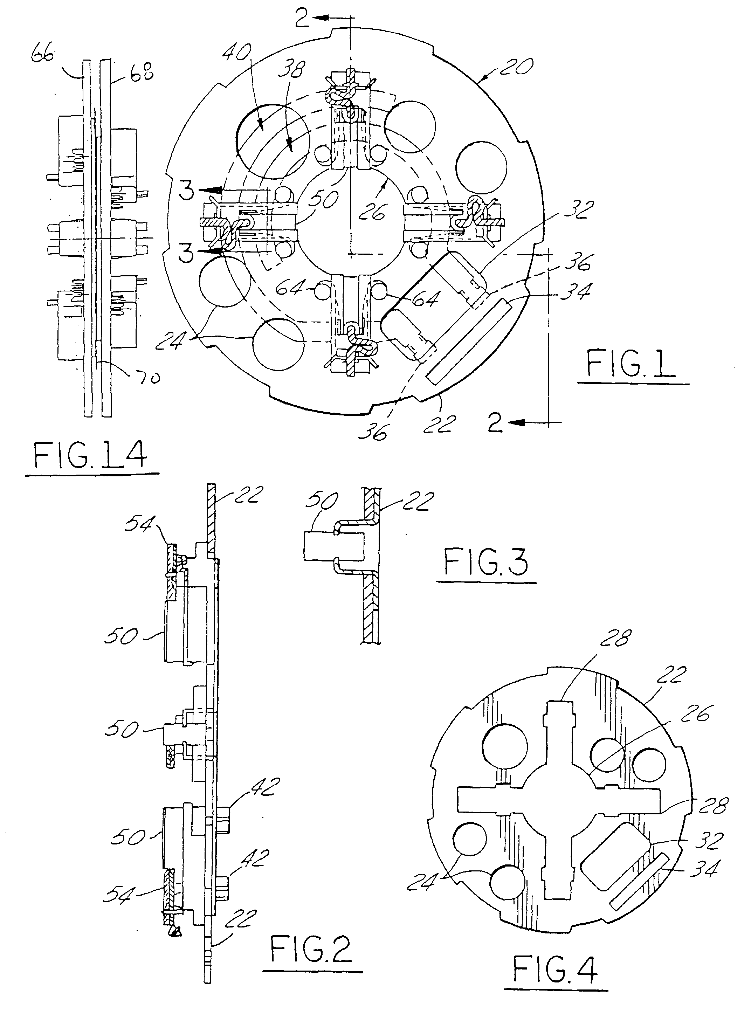

Referring to the drawings by the characters of reference there is illustrated in Fig. 1 a plan view of the assembled brush holder 20 of the preferred embodiment. The base member 22, illustrated in Fig. 4, is fabricated from a non electrically conductive material. The base member 22 has a plurality of apertures such as the apertures 24. A larger central aperture 26 having four elongated slots 28 equally spaced around its periphery provides for mounting the brush boxes 30. In addition there is a pair of cut outs 32, 34 providing means to locate wiring tabs 36.

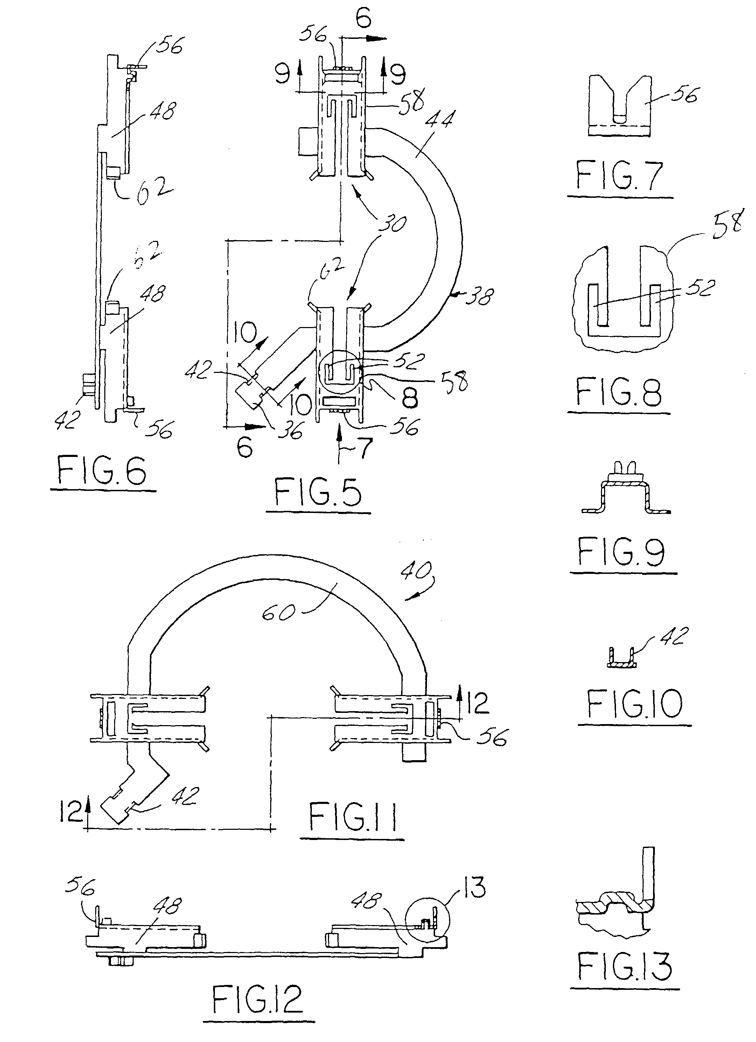

The wiring tabs 36 are formed at the end of the inner bus bar 38 and the outer bus bar 40 as better illustrated in Figs. 5 and 11. Fig. 10 illustrates the downturned members 42 of the wiring tabs which function to locate any connector, not shown, which is used to attach a circuit wire to the bus bar.

Referring to Fig. 5, there is illustrated the formed inner bus bar 38. This bus bar is initially stamped in one flat piece of flexible and resilient electrically conductive material such as copper from which the brush boxes 30 are formed into position. This forms an integral bus bar 38 and brush boxes 30 for the diagonally opposite brush boxes which are electrically connected together through the bus bar plate 44.

Each brush box 30 on each of the inner bus bar 38 and the outer bus bar 40 are identical and the same reference characters will be use in the several Figs for clarity and not having all the reference characters in one Fig. Each brush box has a pair of parallel sides 48 which are spaced to accommodate a brush 50. The top 58 of the brush box is formed with a pair of parallel slots 52, shown more clearly in Fig. 8, at one end to accommodate the wire 54 attached to brush 50. The enclosing end wall 56 of the brush box is more clearly illustrated in Fig. 7 and provides for the brush wire 54 to be located and supported.

Fig. 11 is similar to Fig. 5 with the sole exception that the bus bar plate 60 is formed on a larger radius than the bus bar plate 44. The reason for this is that when the brush holder is assembled, the bus bar plates 44 and 60 are electrically and physically spaced apart.

Referring to Fig. 6 and Fig. 12 sectional views of the inner and outer bus bars 38 and 40 are shown. Integral with the end of the brush box sides 48 is an outwardly formed member 62 which supports a spring means 64 for urging the brush toward the center of the brush holder. The spring means is shown in Fig. 1, as a coiled flat spring one end of which is contained between the side of the brush box and the formed member 62. The leaf spring extends from the one side 48 of the brush box, down the inside of the brush box to the enclosed end, across the enclosed end and back along the inside of the opposite side 48 of the brush box. The other end of the coiled leaf spring is contained between the formed member on the opposite side of the brush box and side of brush box.

The brush holder is assembled by taking the inner bus bar 3 8 and placing it on one side of the base member 22 and have the brush boxes inserted into the elongated slots 28. The flexibility and resiliency of the material will form a sandwich construction with the base member 22 between the bus bar plate 44 and the bottom of the brush boxes 30. The wiring tabs 36 are positioned in the cut out 32.

Next the outer bus bar 40 is assembled to the base member in the same way but with the brush boxes positioned ninety degrees from the brush boxes. Again the flexibility and resiliency of the material will form a sandwich construction with the base member 22 between the bus bar plate 60 and the bottom of the brush boxes 30. Thus the completed brush card hold without the brushes 50 and the spring means 64 comprises only three separate members requiring no additional staking to hold the bus bars and the brush boxes in position. The flexibility and resiliency of the material will form a sandwich construction with the base member 22 between the bus bar plate 44 and the bottom of the brush boxes 30.

To fabricate a four pole, two speed brush holder as illustrated in Fig. 14, it is necessary to fabricate two substantially identical brush holders as illustrated in Fig 1. The first bush holder 66 is for high speed and is substantially similar to the brush holder 20 of Fig. 1. However instead of forming the downturned members 42 of the wiring tabs in a direction opposite the brush boxes as illustrated in Fig. 2, the members are formed in the direction of the brush boxes 30. The central aperture is sized to allow the high speed commutator of the motor to extend therethrough. Additional apertures are formed in the base member of the brush holder 66 to allow the wiring tabs to extend above the top surface of the base member.

The second brush holder 68 is formed on a second base member with the central aperture of a different, smaller, size than that of the first base member 66. This is to accommodate the second commutator in the motor. The first and second brush holders 66, and 68 are positioned with their flat sides facing each other with an insulator 70 positioned therebetween. The insulator prevents any electrical shorting between the two brush holders.

In each brush holder 20, 66, and 68, the outer peripheral surface of the base members is formed with sufficient irregularities to accommodate the location and fixing of the brush holders in the motor during assembly.

A method for assembly a multipole brush holder for a four pole single speed motor comprising the steps of fabricating a first base member from an electrically nonconductive material. The base member has a central aperture with four elongated slots extending equally and angularly outwardly from the aperture forming a cross-like pattern. An inner bus bar member is fabricated from an electrically conductive resilient material having a pair of brush boxes integrally connected by means of a brush bar plate formed so that the brush boxes are spaced from the bus bar plate.

An outer bus bar member is fabricated from an electrically conductive resilient material having a pair of brush boxes integrally connected by means of a brush bar plate formed so that the brush boxes are spaced from the bus bar plate. The brush boxes of the inner bus bar member are inserted into opposite ones of the elongated slots on the base member with the brush bar plate flat against one side of the base member and the brush boxes extending away from the other side of base member. The brush boxes of the outer bus bar member are inserted into the remaining elongated slots on the base member with the brush bar plate flat against the one side of the base member and the brush boxes extending away from the other side of base member so that each brush box on the inner bus member is positioned ninety degrees from a brush box on the outer bus member. Spring means are inserted in each brush box and then brushes are inserted in each brush box and against the spring means.

To assembly a four pole brush holder for a two speed motor requires the additional steps of fabricating a second base member from a second electrically nonconductive material. The base member has a central aperture with a different diameter than the central aperture of the first base member and includes elongated slots extending equally and angularly outwardly from the aperture. A second inner bus bar member is fabricated from an electrically conductive resilient material and has a pair of brush boxes integrally connected by means of a brush bar plate formed so that the brush boxes are spaced from the bus bar plate.

A second outer bus bar member is fabricated from an electrically conductive resilient material and has a pair of brush boxes integrally connected by means of a brush bar plate formed so that the brush boxes are spaced from the bus bar plate. The brush boxes of the second inner bus bar member are inserted into opposite ones of the elongated slots on the second base member with the brush bar plate flat against one side of the base member and the brush boxes extending away from the other side of the second base member. The brush boxes of the second outer bus bar member are inserted into the remaining elongated slots on the base member with the brush bar plate flat against the one side of the second base member and the brush boxes extending away from the other side of base member. The brush boxes on the second inner bus member are positioned ninety degrees from the brush boxes on the second outer bus member. Spring means are inserted in each brush box and then brushes are inserted in each brush box and against the spring means;

Each assembled bus bar member is positioned with the one sides of said first and second base members in a parallel relationship with the central apertures axially inline; and an insulator is positioned between the first and second base members. The insulator has a central aperture that is greater than the central apertures of the first and second base members.

## Claims

1. A brush holder (20) for a multi-pole, single speed motor, said brush holder (20) comprising a base member (22) having a central aperture (26) with elongated slots (28) formed at ninety degree intervals to the circumference of said central aperture (26), an inner bus bar member (38) and an outer bus bar member (40), wherein each of said inner and outer bus bar members (38, 40) have at least one pair of brush boxes disposed in said diagonally, opposite elongated slots (28),
characterised in that,
each of said inner and outer bus bar members (38, 40) have an arcuate bus bar plate (44, 60) fabricated from a flexibly resilient electrically conducting material and arranged so that said at least one pair of brush boxes (30) are disposed at opposite ends of said arcuate bus bar plate (44, 60) and by deformably manipulating said bus bar plate (44, 60) said brush boxes (30) may be snapped into opposite ones of said elongated slots, said brush boxes (30) and said bus bar plate (44, 60) being on slots (28) on opposite sides of said base member (22), the arrangement thereby obviating a requirement for further fixing means for securing said brush boxes to said brush holder (20).

2. A brush holder (20) as claimed in Claims 1 or 2, wherein said bus bar plate (6) of said outer bus bar means (40) has a larger radius than said bus bar plate (44) of said inner bus bar means (38), thereby providing a physically spaced apart and electrical separation between said bus bar plates (60, 44).

3. A brush holder (20) for a multi-pole, two speed motor, comprising a first and a second brush holder (20, 66, 68) as claimed in Claims 1 or 2, and an insulating member (70) disposed between base member (22) of said first and second brush holders (20, 66, 68) on an obverse side to the brush boxes of said first and second brush holders (20).

4. A method for assembling a multi-pole brush holder (20) for a single speed motor comprising the steps of:
(i) fabricating a base member (22) from an electrically non-conductive material with a central aperture (26) and elongated slots (28) extending outwardly from said aperture (26),
(ii) fabricating an inner bus bar member (38) with at least one pair of brush boxes (30),
(iii) fabricating an outer bus bar member (40) with at least one pair of brush boxes (30),
characterised by the steps of,
(iv) forming said inner bus bar member (38) with an arcuate shaped bus bar plate (44) from an electrically conducting resiliently flexible material,
(v) attaching said at least one pair of brush boxes (30) so that a first brush box (30) of the pair and a second brush box (30) of the pair are disposed at opposite ends of the arcuate bus bar plate (44),
(vi) forming said outer bus bar member (40) with an arcuate shaped bus bar plate (60) from an electrically conducting resiliently flexible material,
(vii) attaching said at least one pair of brush boxes (30) so that a first brush box (30) of the pair and a second brush box (30) of the pair are disposed at opposite ends of the arcuate shaped bus bar plate (60), and
(viii) deformably manipulating said inner and outer bus bar plates (60, 44) so that said brush boxes (30) are fixably snapped into said elongated slots (28) of said base member (22) with said inner and outer bus bar plates (44, 60) disposed on opposite sides to said brush boxes (30), said method thereby securing said brush boxes (30) to said brush holder (20) without a requirement for a further fixing means.

5. A method for assembling a multi-pole brush holder (20) for a two speed motor, comprising the steps of;
fabricating a first brush holder (66) in accordance with steps (i) to (viii) of Claim 4,
fabricating a second brush holder (68) in accordance with steps (i) to (viii) of Claim 4,
disposing said first and said second brush holders (20, 66, 68) such that the base base members (22) thereof are mutually parallel and the central apertures (26) are axially in line; and
placing an insulator (70) between said first and second base members (22), said insulator (70) having a central aperture that is greater than said central apertures (26) of said first and said second base members (22).

## Patentansprüche

1. Bürstenhalter (20) für einen mehrpoligen Motor mit nur einer Drehzahl, wobei der Bürstenhalter (20) ein Basisteil (22) mit einer mittigen Öffnung (26) und Längsschlitzen (28) aufweist, die in 90° Abständen am Umfang der mittigen Öffnung (26) vorgesehen sind, mit einem inneren Anschlußschienenteil (3 8) und einem äußeren Anschlußschienenteil (40), wobei jedes innere und äußere Anschlußschienenteil (3 8,40) mindestens ein Paar Bürstenkanäle aufweist, die in den diagonal einander gegenüberliegenden Längsschlitzen (28) angeordnet sind, dadurch gekennzeichnet, daß das innere und äußere Anschlußschienenteil (38,40) jeweils eine bogenförmige Anschlußschienenplatte (44,60) aufweist, die aus elastischem, elektrisch leitfähigem Werkstoff hergestellt und so angeordnet ist, daß die Bürstenkanäle (30) jeweils an entgegengesetzten Enden der bogenförmigen Anschlußschienenplatte (44,66) angeordnet sind und daß die Anschlußschienenplatte (44,66) deformierbar ist, so daß die Bürstenkanäle (30) in einander gegenüberliegende Längsschlitze einrastbar sind, wobei die Bürstenkanäle (30) und die Anschlußschienenplatte (44,66) in Schlitzen (28) auf gegenüberliegenden Seiten des Basisteils (22) liegen, und die Anordnung damit auf weitere Befestigungsmittel zum Halten der Bürstenkanäle am Bürstenhalter (20) verzichtet.

2. Bürstenhalter (20) nach Anspruch 1, wobei die Anschlußschienenplatte (60) der äußeren Anschlußschienenmittel (40) einen größeren Radius als die Anschlußschienenplatte (44) der inneren Anschlußschienenmittel (38) aufweist, womit man eine physikalisch beabstandete und elektrische Trennung zwischen den Anschlußschienenplatten (60,44) erhält.

3. Bürstenhalter (20) für einen mehrpoligen Motor mit zwei Drehzahlen, bestehend aus einem ersten und einem zweiten Bürstenhalter (20,66,68) nach einem der Ansprüche 1 oder 2, mit einem Isolierbauteil (70) zwischen dem Basisteil (22) des ersten und zweiten Bürstenhalters (20,66,68) auf der den Bürstenkanälen des ersten und zweiten Bürstenhalters (20) abgekehrten Seite.

4. Verfahren zur Montage eines mehrpoligen Bürstenhalters (20) für einen Motor mit nur einer Drehzahl, das folgende Schritte aufweist:
(i) ein Basisteil (22) aus einem elektrisch nicht leitfähigem Werkstoff wird mit einer mittigen Öffnung (26) und Längsschlitzen (28) hergestellt, die sich von der Öffnung (26) nach außen erstrecken;
(ii) ein inneres Anschlußschienenteil (38) mit mindestens zwei Anschlußbürstenkanälen (30) wird hergestellt;
(iii) ein äußeres Anschlußschienenteil (40) mit mindestens zwei Bürstenkanälen (30) wird hergestellt,
gekennzeichnet durch folgende Schritte:
(iv) das innere Anschlußschienenteil (38) wird aus einer bogenförmigen Anschlußschienenplatte (44) eines elektrisch leitfähigen, elastischen Werkstoffes hergestellt;
(v) mindestens ein Paar Bürstenkanäle (30) wird angeformt, so daß ein erster Bürstenkanal (30) und ein zweiter Bürstenkanal (30) des Bürstenkanalpaares an entgegengesetzten Enden der bogenförmigen Anschlußschienenplatte (44) vorgesehen sind;
(vi) das äußere Anschlußschienenteil (40) wird aus einer bogenförmigen Anschlußschienenplatte (60) eines elektrisch leitfähigen, elastischen Werkstoffes hergestellt;
(vii) mindestens ein Paar Bürstenkanäle (30) wird vorgesehen, so daß ein erster Bürstenkanal (30) und ein zweiter Bürstenkanal (30) des Paars an gegenüberliegenden Enden der bogenförmigen Anschlußschienenplatte (60) vorgesehen sind und
(viii) die innere und äußere Anschlußschienenplatte (60,44) werden derart deformiert, daß die Bürstenkanäle (30) zur Befestigung in die Längsschlitze (28) des Basisteils (22) einrasten, wobei die inneren und äußeren Anschlußschienenplatten (44,60) auf gegenüberliegenden Seiten der Bürstenkanäle (30) liegen, wobei das Verfahren auf diese Weise die Bürstenkanäle (30) am Bürstenhalter (20) befestigt, ohne daß weitere Befestigungsmittel erforderlich sind.

5. Verfahren zur Montage eines mehrpoligen Bürstenhalters (20) für einen Motor mit zwei Drehzahlen, das die folgenden Schritte aufweist:
ein erster Bürstenhalter (66) wird entsprechend den Schritten (i-viii) des Anspruchs 4 hergestellt;
ein zweiter Bürstenhalter (68) wird entsprechend den Schritten (i-viii) des Anspruchs 4 hergestellt;
der erste und zweite Bürstenhalter (20,66,68) werden so angeordnet, daß die Basisteile (22) zueinander parallel liegen und die mittigen Öffnungen (26) axial fluchten und
eine Isolierung (70) wird zwischen dem ersten und zweiten Basisteil (22) eingesetzt, wobei die Isolierung (70) eine mittige Öffnung hat, die größer ist als die mittigen Öffnungen (26) des ersten und zweiten Basisteils (22).

## Revendications

1. Porte-balais (20) destiné à un moteur multipolaire à une vitesse, ledit porte-balais (20) comprenant un organe formant embase (22) qui comporte une ouverture centrale (26) présentant des rainures allongées (28) formées à des intervalles de quatre-vingt dix degrés le long de la circonférence de ladite ouverture centrale (26), un organe formant barre collectrice intérieure (38) et un organe formant barre collectrice extérieure (40), dans lequel chacun desdits organes formant barres collectrices intérieure et extérieure (38, 40) ont au moins une paire de cages de porte-balais disposées dans des rainures allongées diagonalement opposées (28),
caractérisé en ce que,
chacun desdits organes formant barres collectrices intérieure et extérieure (38, 40) comprend une plaque de barre collectrice incurvée (44, 60) fabriquée à partir d'un matériau électriquement conducteur élastique et flexible, et disposée de telle sorte que ladite au moins une paire de cages (30) de porte-balais est disposée à des extrémités opposées de ladite plaque de barre collectrice incurvée (44, 60) et qu'en déformant par manipulation ladite plaque de barre collectrice (44, 60), les cages (30) de porte-balais peuvent s'encliqueter dans celles, opposées, desdites rainures allongées, lesdites cages (30) de porte-balais et ladite plaque de barre collectrice (44, 60) se trouvant sur des faces opposées dudit organe formant embase (22), le montage supprimant ainsi le besoin d'autres moyens de fixation destinés à fixer lesdites cages de porte-balais audit porte-balais (20).

2. Porte-balais (20) selon les revendications 1 ou 2, dans lequel ladite plaque de barre collectrice (6) dudit organe formant barre collectrice extérieure (40) a un rayon plus grand que ladite plaque de barre collectrice (44) dudit organe formant barre collectrice intérieure (38), établissant ainsi une séparation physique et électrique entre lesdites plaques de barres collectrices (60, 44).

3. Porte-balais (20) destiné à un moteur multipolaire à deux vitesses, comprenant un premier et un second porte-balais (20, 66, 68) selon les revendications 1 ou 2, et un organe isolant (70) disposé entre l'organe formant embase (22) desdits premier et second porte-balais (20, 66, 68) sur une face opposée aux cages de porte-balais desdits premier et un second porte-balais (20).

4. Procédé pour assembler un porte-balais multipolaire (20) d'un moteur à une vitesse, comprenant les étapes consistant :
(i) à fabriquer un organe formant embase (22) à partir d'un matériau électriquement non conducteur comportant une ouverture centrale (26) et des rainures allongées (28) s'étendant vers l'extérieur à partir de ladite ouverture (26),
(ii) à fabriquer un organe formant barre collectrice intérieure (38) ayant au moins une paire de cages de porte-balais (30),
(iii) à fabriquer un organe formant barre collectrice extérieure (40) ayant au moins une paire de cages de porte-balais (30),
caractérisé par les étapes consistant,
(iv) à former ledit organe formant barre collectrice intérieure (38) à plaque de barre collectrice incurvée (44), à partir d'un matériau électriquement conducteur élastique et flexible,
(v) à assujettir ladite au moins une paire de cages de porte-balais (30) de telle sorte qu'une première cage de porte-balais (30) de la paire et qu'une seconde cage de porte-balais (30) de la paire sont disposées à des extrémités opposées de la plaque de barre collectrice incurvée (44),
(vi) à former ledit organe formant barre collectrice extérieure (40) à plaque de barre collectrice incurvée (60) à partir d'un matériau électriquement conducteur élastique et flexible,
(vii) à assujettir ladite au moins une paire de cages de porte-balais (30) de telle sorte qu'une première cage de porte-balais (30) de la paire et qu'une seconde cage de porte-balais (30) de la paire sont disposées à des extrémités opposées de la plaque de barre collectrice de forme incurvée (60), et
(viii) à déformer par manipulatin lesdites plaques de barres collectrices intérieure et extérieure (60, 44), de sorte que lesdites cages de porte-balais (30) se fixent par encliquetage dans lesdites rainures allongées (28) dudit organe formant embase (22), lesdites plaques de barres collectrices intérieure et extérieure (44, 60) étant disposées sur des faces opposées auxdites cages de porte-balais (30), ledit procédé permettant de fixer lesdites cages de porte-balais (30) audit porte-balais (20) sans autres moyens de fixation.

5. Procédé pour assembler un porte-balais multipolaire (20) d'un moteur à deux vitesses, comprenant les étapes consistant ;
à fabriquer un premier porte-balais (66) conformément aux étapes (i) à (viii) de la revendication 4,
à fabriquer un second porte-balais (68) conformément aux étapes (i) à (viii) de la revendication 4,
à disposer lesdits premier et second porte-balais (20, 66, 68) de telle façon que leurs organes formant embases (22) sont mutuellement parallèles et que les ouvertures centrales sont axialement en ligne ; et
à placer un corps isolant (70) entre lesdits premier et second organes formant embases (22), ledit corps isolant (70) comportant une ouverture centrale qui est plus importante que les ouvertures centrales desdits premier et second organes formant embases (22).
